# FASCICULE DE BREVET EUROPEEN

(11) **EP 2 316 299 B1**
(45) Date de publication et mention de la délivrance du brevet: **27.02.2013**
(21) Numéro de dépôt: 09174182.7
(22) Date de dépôt: 27.10.2009
(51) Int. Cl.: B29C 69/00, G04B 3/04, G04B 45/00, G04B 37/22, A44C 27/00, B29C 39/18, B29C 70/74

(54) **Pièce comportant une structure en matériau inorganique et un revêtement élastomère et procédé pour l'obtention d'une telle pièce**
Teil, das eine Struktur aus anorganischem Material und eine Elastomerschicht umfasst, und Verfahren zur Herstellung eines solchen Teils
Part comprising a structure made from inorganic material and an elastomer covering and method for obtaining such a part

(43) Date de publication de la demande: 04.05.2011
(73) Titulaire: BIWI S.A., 2855 Glovelier (CH)
(72) Inventeur: Bourquard, Pascal, 2854, Bassecourt (CH)
(74) Mandataire: Micheli & Cie SA

(56) Documents cités:
- EP-A- 1 350 438
- WO-A-2006/064297
- US-A- 4 670 205
- US-A- 5 198 168
- US-B1- 6 203 643

## Description

### Domaine technique

La présente invention se rapporte aux pièces munies d'un revêtement, et plus particulièrement à des pièces comportant une structure en matériau inorganique, tel que le métal, et recouvertes partiellement d'un élastomère. De telles pièces peuvent être utilisées notamment dans le domaine de l'horlogerie ou de la bijouterie, mais également dans d'autres objets d'usage courant tels que des téléphones portables par exemple.

### Etat de la technique

Une pièce de ce type est décrite dans le document EP1350438 au nom de la demanderesse. Sa partie métallique, faite par exemple en acier inoxydable ou en laiton, est revêtue d'un élastomère tel qu'un caoutchouc synthétique. Cette pièce est, en outre, garnie de pierres.

La combinaison de caoutchouc et de pierres confère à la pièce un aspect original, permettant un contraste entre la clarté des pierres et le côté sombre du caoutchouc.

Il est toutefois difficile de mettre aussi en valeur le métal du fait que la liaison entre une ou des portions métalliques apparentes et le caoutchouc manque de précision, à cause des techniques de mise en place de ce matériau, par exemple le surmoulage, qui ne permettent pas de garantir une précision suffisante.

### Divulgation de l'invention

Le but de la présente invention est de permettre une telle liaison.

A cet effet, la pièce comporte une structure en matériau inorganique, avantageusement en métal, munie d'un décor en relief et d'une couche d'élastomère jouxtant ce relief. Selon l'invention, le relief et la couche d'élastomère ont des surfaces apparentes dont l'état de surface est similaire, reliées l'une à l'autre sans solution de continuité. Dès lors que les états de surface sont similaires, on obtient ainsi une surface continue, ayant un aspect homogène, malgré le contraste des matériaux utilisés et leurs caractéristiques physiques et mécaniques très différentes.

Le matériau inorganique est de préférence un métal qui peut être notamment choisi parmi l'acier inoxydable, le titane, l'or, le platine, l'argent, et le laiton.

L'élastomère est avantageusement choisi de manière que sa dureté Shore A soit comprise entre 40 et 80, de préférence entre 60 et 80. De la sorte, on obtient de bonnes conditions de travail et une bonne résistance au porter.

Les polymères de type nitrile (tels que Nitrile Butadiene Rubber NBR) sont particulièrement bien adaptés pour ce type d'application.

II est également possible d'utiliser un élastomère de type fluoroélastomère.

En outre, il peut être avantageux de prévoir une couche d'agent d'adhérisation intercalée entre la structure et la couche d'élastomère.

Si l'élastomère est de type auto-adhérent, une couche intermédiaire d'agent d'adhérisation n'est pas nécessaire.

Le relief peut être disposé dans la partie centrale de la couche d'élastomère. II peut aussi former un cadre entourant la couche d'élastomère.

Les surfaces de la couche d'élastomère et du relief présentent avantageusement un état de surface satiné ou poli.

La présente invention concerne également un procédé de fabrication d'une pièce telle que définie ci-dessus, à partir d'une structure en matériau inorganique, par exemple métallique. Ce procédé comporte les étapes suivantes :
- définir au moins un relief dans la structure, jouxtant au moins une zone en creux,
- recouvrir la zone en creux et le relief d'une couche d'un élastomère,
- éliminer par abrasion l'élastomère jusqu'à rendre le relief apparent,
- effectuer une opération de finition sur les surfaces du relief et de l'élastomère lui conférant leur aspect final.

En outre, le procédé peut comprendre une étape supplémentaire consistant à revêtir la zone en creux, au moins dans la partie adjacente audit relief, d'une couche d'un agent d'adhérisation, préalablement à l'étape de recouvrir le relief et la zone en creux recouverte de ladite couche d'adhérisation d'une couche d'élastomère.

Afin de garantir à la pièce un aspect esthétique intéressant, l'opération de finition est de type satinage ou polissage.

Le procédé selon l'invention est avantageusement utilisé pour fabriquer des pièces d'horlogerie, telles que des bracelets, de couronnes ou des lunettes, ou des pièces de bijouterie.

### Brève description des dessins

L'invention sera mieux comprise à la lecture de la description qui va suivre, donnée à titre d'exemple et faite en référence au dessin dans lequel :
- les figures 1 à 6 représentent, en vue cavalière et en coupe, les différentes étapes relatives à la mise en oeuvre du procédé selon l'invention sur une pièce constitutive d'un fermoir ; et
- les figures 7 à 12 sont des vues en coupe d'une couronne de mise à l'heure pour montre représentée dans les différentes étapes de sa fabrication par le procédé selon l'invention.

Sur ces figures, les échelles ne sont pas respectées pour rendre plus compréhensibles les différentes étapes du procédé.

### Mode(s) de réalisation de l'invention

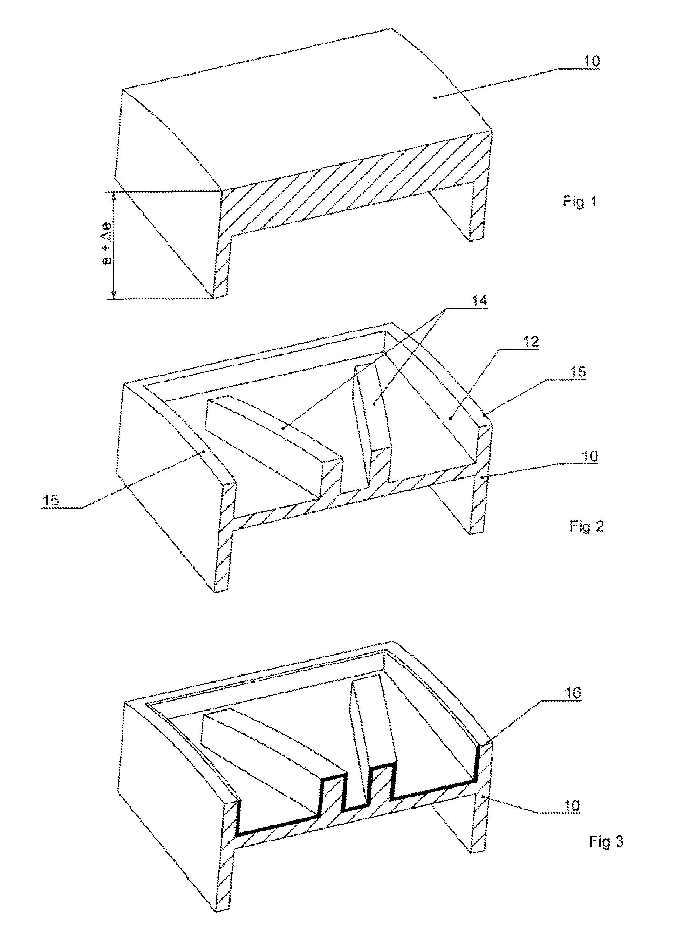

La figure 1 montre une pièce constitutive d'un fermoir de bracelet 10, en acier inoxydable destiné à être partiellement revêtue d'une couche d'élastomère, par le procédé selon l'invention. La face supérieure a une surépaisseur Δe de 0,05mm par rapport à la cote e de la partie 10 terminée.

La face supérieure est ensuite travaillée (figure 2) pour former une creusure 12, par fraisage, attaque chimique, laser, étampage ou par tout autre procédé connu de l'homme du métier. Un décor apparaît formant un relief 14, pouvant représenter une marque ou un dessin esthétique. Le pourtour de la creusure 12, également en relief, constitue une cloison en surépaisseur 15 ayant essentiellement une fonction esthétique.

On relèvera que, si l'état de surface du fond de la creusure 12 n'est pas important, il est par contre primordial que le pourtour du décor soit parfait, celui-ci formant le contraste entre le métal et l'élastomère, comme cela sera expliqué plus loin. La profondeur de la creusure 12 est au minimum de 0,05 mm.

En variante le décor 14 formant relief pourrait être rapporté, être obtenu par emboutissage ou encore par tout autre procédé connu de l'homme du métier et permettant de former un décor en relief.

La surface destinée à recevoir l'élastomère est ensuite recouverte d'une couche 16 d'un agent d'adhérisation, visible sur la figure 3. L'homme du métier sait choisir l'agent d'adhérisation en fonction de la nature de l'élastomère et de la surface de la pièce.

La couche 16 a une épaisseur très faible, de l'ordre de 0,02 mm. Elle est déposée sur la pièce 10 par pulvérisation, les parties devant être épargnées étant protégées par un masque. II est également possible de faire appel aux techniques de photolithographie. La couche 16 apparaît sur les figures avec une épaisseur exagérée de manière à la rendre apparente.

En variante, l'agent d'adhérisation peut être éliminé mécaniquement ou chimiquement des zones non recouvertes après seulement que la pièce a été terminée. De la sorte, la couche 16 peut assurer une protection en cours de fabrication.

On relèvera que le relief ne doit pas nécessairement être recouvert de l'agent d'adhérisation, dès lors que l'élastomère sera ensuite retiré de ces zones-là.

Par ailleurs, une telle couche d'agent d'adhérisation intermédiaire n'est pas obligatoire dans tous les cas. La présence d'une couche d'agent d'adhérisation intermédiaire dépend notamment de la nature de l'élastomère (par exemple si l'élastomère utilisé est auto-adhérent), du procédé utilisé et de l'épaisseur de la couche d'élastomère. Une couche très mince d'élastomère peut ne pas nécessiter d'utiliser une couche d'agent d'adhérisation intermédiaire.

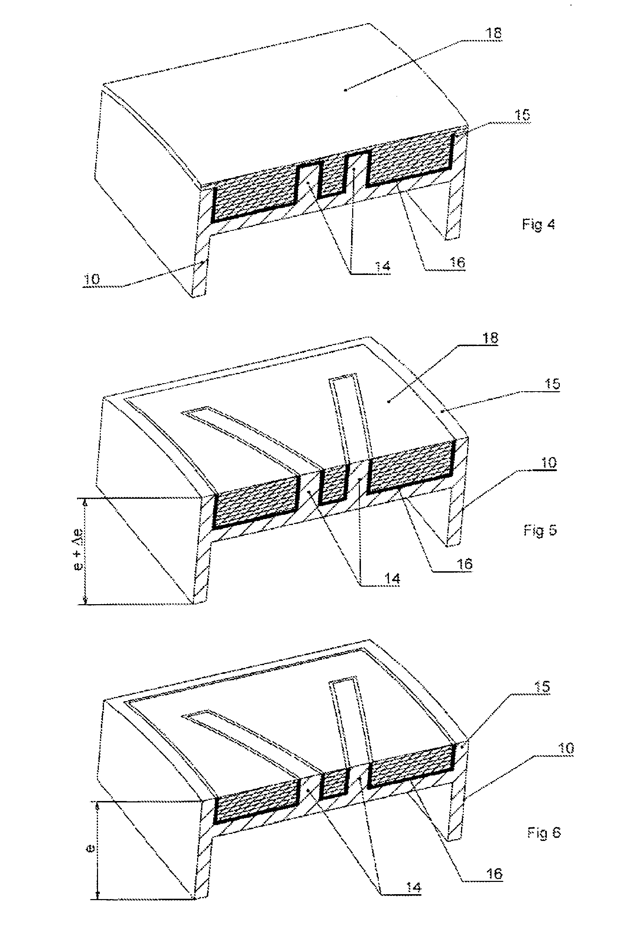

Après le dépôt de la couche 16, et comme le montre la figure 4, une couche 18 de l'élastomère est mise en place par surmoulage, selon l'une quelconque des techniques connues, soit l'injection, la compression, l'injection compression, l'injection transferts, enduction (pulvérisation, trempage, raclage), etc. Quelle que soit la technique utilisée, la couche 18 recouvrira complètement le décor 14 et la cloison 15 d'au moins 0,05mm.

Un nitrile de dureté Shore A comprise entre 40 et 80, de préférence entre 60 et 80 convient parfaitement pour de telles applications. En fonction des applications et des réglementations en vigueur, on veillera à choisir un matériau biocompatible.

L'opération suivante, illustrée à la figure 5, consiste à enlever la surépaisseur de l'élastomère 18 par abrasion, par exemple au moyen d'une machine à lapider, qui est munie d'une meule. De telles machines sont bien connues de l'homme du métier.

Enfin, au cours d'une opération de finition, représentée à la figure 6, l'état de surface est finalisé, par émerisage, satinage ou polissage. C'est au cours de cette opération qu'est enlevée la surépaisseur Δe mentionnée en référence à la figure 1.

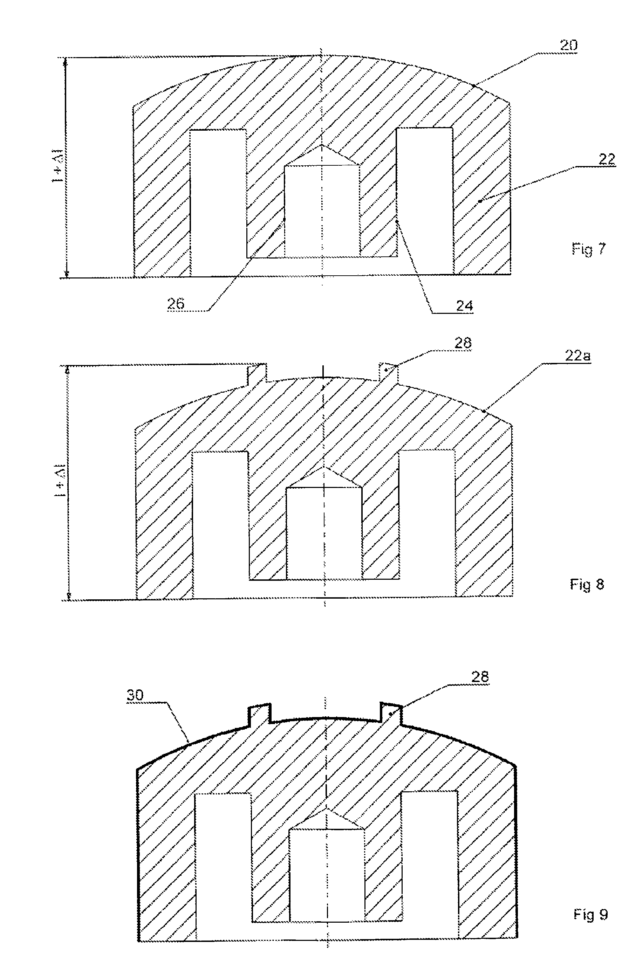

Les figures 7 à 12 représentent, vue en coupe, une couronne de mise à heure 20 au cours des différentes étapes conduisant à sa réalisation par un procédé selon l'invention.

La couronne 20 comprend une partie 22 en métal, en forme de coupelle. Elle est munie, à l'intérieur de la coupelle, d'un tube 24 venu de matière avec la coupelle 22 et percé d'un trou borgne 26 taraudé. La longueur I de la coupelle 22, dans son extrémité pleine 22a, est augmentée d'une valeur ΔI environ égale à 0,05mm. La fabrication de la couronne 20 présente de nombreuses similitudes avec celle de la partie de fermoir décrite précédemment. Les matériaux utilisés et les techniques de travail peuvent être les mêmes. C'est pourquoi les différentes étapes ne seront pas décrites de manière aussi détaillée.

Dans une première opération (figure 8), un décor en relief 28 est formé sur la partie extérieure de l'extrémité 22a, par exemple le logo de la marque que portera la montre. La hauteur du décor est avantageusement comprise entre 0,30 et 0,60 mm.

L'étape suivante, illustrée à la figure 9, consiste à déposer une couche 30 d'un agent d'adhérisation recouvrant tout l'extérieur de la coupelle 22.

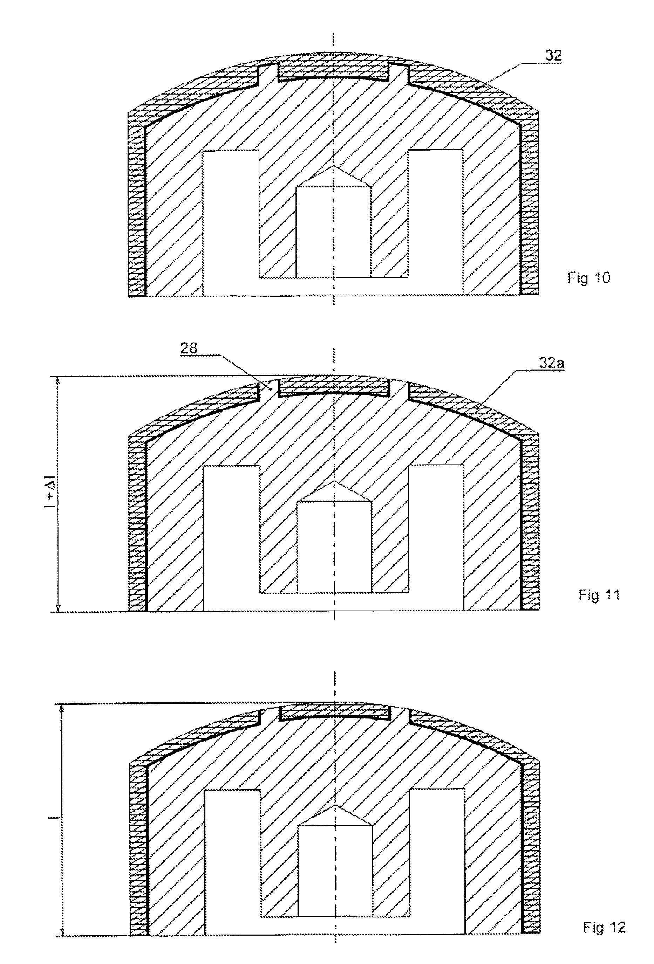

Un élastomère est ensuite déposé sur la coupelle 22, formant une couche 32 qui recouvre totalement la coupelle 22 et le décor 28. La couche 32 est en surépaisseur de 0,05 mm à 0,10 mm au-dessus du décor 28, comme illustré à la figure 10. Cette figure montre, en outre, que l'élastomère est également déposé sur la portion cylindrique extérieure de la coupelle 22, formant ainsi la portion de la couronne destinée à être manipulée pour effectuer le remontage ou la mise à l'heure de la montre.

La couche d'élastomère 32 formant l'extrémité de la couronne 20 est abrasée ou lapidée, jusqu'à voir apparaître le décor 28 (figure 11). La surface du décor 28 et la portion adjacente 32a de la couche 32 sont ensuite traités pour assurer la terminaison de la surface, enlevant le supplément de longueur ΔI, par exemple par satinage ou polissage.

On relèvera que la portion cylindrique de la couche 32 ne doit pas nécessairement être abrasée ou lapidée dès lors que la liaison avec la portion 32a se fait par une arête.

Ainsi, tant dans le premier que dans le deuxième mode de réalisation, le relief et l'élastomère adjacent forment des surfaces se trouvant au même niveau et présentant des états similaires.

De prime abord, un tel résultat peut paraître surprenant dès lors que le matériau inorganique, par exemple un métal tel que l'acier inoxydable notamment, et les élastomères, présentent des duretés différentes et réagissent différemment aux abrasifs. Malgré cela, l'expérience montre que, dans la mesure où l'épaisseur de la couche d'élastomère est ajustée de manière satisfaisante, par exemple supérieure ou égale à 0,25 mm après les opérations de terminaison, les surfaces adjacentes du métal et de l'élastomère sont jointives et au même niveau.

Dans les exemples donnés, l'élastomère est un nitrile de type NBR (Nitrile butadiene rubber) dont la dureté Shore A est comprise entre 60 et 80. II est évident que d'autres élastomères pourraient aussi être utilisés, notamment des fluoroélastomères, des perfluoroélastomères, des élastomères thermoplastiques, et des silicones. La gamme de dureté joue toutefois un rôle important pour obtenir de bonnes conditions de travail et une bonne résistance au porter. Ainsi, il est préférable que le matériau organique utilisé présente une dureté Shore A supérieure à 40, de préférence supérieure à 60. La dureté permet d'assurer une bonne uniformité de surface entre le relief et l'élastomère lors de l'émerisage. Par ailleurs, la viscosité de l'élastomère est choisie de sorte que l'élastomère enveloppe correctement le relief lors du surmoulage.

On peut utiliser un élastomère d'une seule couleur ou de couleurs différentes, appliqué selon les procédés connus de l'homme du métier pour obtenir une couche d'élastomère comprenant des motifs de différentes couleurs.

Le matériau inorganique est de préférence un métal. II est également possible d'envisager l'usage d'un autre type de matériau, par exemple une pierre telle que du granit. II devra toutefois présenter une dureté suffisamment faible pour pouvoir être abrasé ou lapidé en même temps que l'élastomère.

En fonction de l'application et des réglementations en vigueur, l'homme du métier veillera, bien sûr à n'utiliser que des matériaux biocompatibles, tant en ce qui concerne le matériau inorganique que l'élastomère.

Ainsi, grâce au procédé décrit, il est possible de réaliser des pièces constituées à la fois d'une structure en matériau inorganique, tel qu'un métal, et d'un élastomère, reliées l'une à l'autre sans solution de continuité, c'est-à-dire sans rupture ou interstice, dès lors qu'elles ont des surfaces apparentes d'aspect similaire, par exemple poli ou satiné.

## Revendications

1. Pièce d'horlogerie ou de bijouterie comportant une structure en matériau inorganique, (10, 20), munie d'au moins un relief (14, 15, 28) et d'une couche d'élastomère (18, 32) jouxtant ledit relief (14, 15, 28), **caractérisée en ce que** ledit relief (14, 15, 28) et ladite couche d'élastomère (18, 32) ont des surfaces apparentes dont l'état de surface est similaire, reliées l'une à l'autre sans solution de continuité.

2. Pièce selon la revendication 1, **caractérisée en ce que** ladite structure (10, 20) est en métal.

3. Pièce selon la revendication 2, **caractérisée en ce que** ledit métal est choisi parmi l'acier inoxydable, le titane, l'or, le platine, l'argent et le laiton.

4. Pièce selon l'une quelconque des revendications 1 à 3, **caractérisée en ce que** ladite couche d'élastomère (18, 32) présente une dureté Shore A comprise entre 40 et 80.

5. Pièce selon l'une quelconque des revendications 1 à 4, **caractérisée en ce que** ladite couche d'élastomère (18, 32) est réalisée en un polymère de type nitrile.

6. Pièce selon l'une quelconque des revendications précédentes, **caractérisée en ce qu'**elle comprend une couche d'agent d'adhérisation (16, 30) intercalée entre la structure (10, 20) et la couche d'élastomère (18, 32).

7. Pièce selon l'une quelconque des revendications 1 à 6, **caractérisée en ce que** la couche dudit élastomère (18, 32) est formée d'un fluoroélastomère.

8. Pièce selon l'une des revendications 1 à 7, **caractérisée en ce que** ledit relief (14, 15) comporte, en outre, un cadre (15) entourant la couche d'élastomère (18), ledit cadre (15) ayant une surface apparente reliée à la surface apparente de la couche d'élastomère sans solution de continuité.

9. Pièce selon l'une des revendications 1 à 8, **caractérisée en ce que** les surfaces de la couche de polymère (18, 32) et dudit relief (14, 15, 28) présentent un état de surface satiné ou poli.

10. Procédé de fabrication d'une pièce d'horlogerie ou bijouterie selon l'une des revendications 1 à 9, à partir d'une structure en matériau inorganique, **caractérisé en ce qu'**il comporte les étapes suivantes :
- définir au moins un relief (14, 15, 28) dans la structure (10, 20) entouré d'au moins une zone en creux (12, 22a),
- recouvrir la zone en creux et le relief d'une couche d'un élastomère (18, 32),
- éliminer par abrasion l'élastomère jusqu'à rendre le relief apparent,
- effectuer une opération de finition sur les surfaces du relief et de l'élastomère lui conférant leur aspect final.

11. Procédé selon la revendication 10, **caractérisé en ce qu'**il comprend en outre une étape consistant à revêtir a zone en creux (12, 22a), au moins dans la partie adjacente audit relief (14, 15, 28), d'une couche d'un agent d'adhérisation (16, 30) préalablement à l'étape de recouvrir le relief et la zone en creux recouverte de ladite couche d'adhérisation d'une couche d'élastomère (18, 32).

12. Procédé selon l'une quelconque des revendications 10 à 11, **caractérisé en ce que** l'opération de finition est de type satinage ou polissage.

## Claims

1. Timepiece or item of jewellery comprising a structure made from inorganic material (10, 20), provided with at least one relief (14, 15, 28) and a layer of elastomer (18, 32) adjoining the said relief (14, 15, 28), **characterised in that** the said relief (14, 15, 28) and the said layer of elastomer (18, 32) have visible surfaces whose surface state is similar, which are connected to each other without solution of continuity.

2. Timepiece or item of jewellery as claimed in claim 1, **characterised in that** the said structure (10, 20) is made of metal.

3. Timepiece or item of jewellery as claimed in claim 2, **characterised in that** the said metal is selected from stainless steel, titanium, gold, platinum, silver and brass.

4. Timepiece or item of jewellery as claimed in any one of claims 1 to 3, **characterised in that** the said layer of elastomer (18, 32) has a Shore A hardness between 40 and 80.

5. Timepiece or item of jewellery as claimed in any one of claims 1 to 4, **characterised in that** the said layer of elastomer (18, 32) is produced from a nitrile-type polymer.

6. Timepiece or item of jewellery as claimed in any one of the preceding claims, **characterised in that** it comprises a layer of adhesion-enhancing agent (16, 30) interposed between the structure (10, 20) and the layer of elastomer (18, 32).

7. Timepiece or item of jewellery as claimed in any one of claims 1 to 6, **characterised in that** the layer of the said elastomer (18, 32) is formed from a fluoroelastomer.

8. Timepiece or item of jewellery as claimed in any one of claims 1 to 7, **characterised in that** the said relief (14, 15) further comprises a frame (15) surrounding the layer of elastomer (18), the said frame (15) having a visible surface connected to the visible surface of the layer of elastomer without solution of continuity.

9. Timepiece or item of jewellery as claimed in any one of claims 1 to 8, **characterised in that** the surfaces of the polymer layer (18, 32) and of the said relief (14, 15, 28) have a burnished or polished surface state.

10. Method of producing a timepiece or item of jewellery as claimed in any one of claims 1 to 9 from a structure of inorganic material, **characterised in that** it comprises the following steps:
- defining at least one relief (14, 15, 28) in the structure (10, 20) surrounded by at least one hollow zone (12, 22a),
- covering the hollow zone and the relief with a layer of an elastomer (18, 32),
- removing the elastomer by abrasion until the relief becomes visible,
- carrying out a finishing operation on the surfaces of the relief and of the elastomer, providing it with their final appearance.

11. Method as claimed in claim 10, **characterised in that** it further comprises a step consisting of coating the hollow zone (12, 22a), at least in the part adjacent to the said relief (14, 15, 28), with a layer of an adhesion-enhancing agent (16, 30) prior to the step of covering the relief and the hollow zone covered with the said adhesion-enhancing layer with a layer of elastomer (18, 32).

12. Method as claimed in any one of claims 10 to 11, **characterised in that** the finishing operation is of a burnishing or polishing type.

## Patentansprüche

1. Bauteil für die Uhren- oder Schmuckherstellung, das eine Struktur aus anorganischem Material aufweist, (10, 20), welche mit mindestens einem Relief (14, 15, 28) und einer Elastomerschicht (18, 32), die an das Relief (14, 15, 28) grenzt, versehen ist, **dadurch gekennzeichnet, dass** das Relief (14, 15, 28) und die Elastomerschicht (18, 32) offenliegende Flächen haben, deren Oberflächenzustand ähnlich ist, wobei sie miteinander ohne Unterbrechung verbunden sind.

2. Bauteil nach Anspruch 1, **dadurch gekennzeichnet, dass** die Struktur (10, 20) aus Metall ist.

3. Bauteil nach Anspruch 2, **dadurch gekennzeichnet, dass** das Metall aus nichtrostendem Stahl, Titan, Gold, Platin, Silber und Messing ausgewählt ist.

4. Bauteil nach einem beliebigen der Ansprüche 1 bis 3, **dadurch gekennzeichnet, dass** die Elastomerschicht (18, 32) eine Shore-A-Härte im Bereich von 40 bis 80 aufweist.

5. Bauteil nach einem beliebigen der Ansprüche 1 bis 4, **dadurch gekennzeichnet, dass** die Elastomerschicht (18, 32) aus einem Polymer des Nitriltyps hergestellt ist.

6. Bauteil nach einem beliebigen der vorhergehenden Ansprüche, **dadurch gekennzeichnet, dass** es eine Haftvermittlerschicht (16, 30) umfasst, die zwischen der Struktur und (10, 20) der Elastomerschicht (18, 32) eingefügt ist.

7. Bauteil nach einem beliebigen der Ansprüche 1 bis 6, **dadurch gekennzeichnet, dass** die Schicht des Elastomers (18, 32) aus einem Fluorelastomer gebildet ist.

8. Bauteil nach einem der Ansprüche 1 bis 7, **dadurch gekennzeichnet, dass** das Relief (14, 15) darüber hinaus einen Rahmen (15) aufweist, der die Elastomerschicht (18) umgibt, wobei der Rahmen (15) eine offenliegende Fläche hat, die mit der offenliegenden Fläche der Elastomerschicht ohne Unterbrechung verbunden ist.

9. Bauteil nach einem der Ansprüche 1 bis 8, **dadurch gekennzeichnet, dass** die Flächen der Polymerschicht (18, 32) und des Reliefs (14, 15, 28) einen satinierten oder polierten Oberflächenzustand aufweisen.

10. Verfahren zur Herstellung eines Bauteils für die Uhren- oder Schmuckherstellung nach den Ansprüchen 1 bis 9, ausgehend von einer Struktur aus anorganischem Material, **dadurch gekennzeichnet, dass** es die folgenden Schritte aufweist:
- Festlegen mindestens eines Reliefs (14, 15, 28) in der Struktur (10, 20), umgeben von mindestens einem ausgehöhlten Bereich (12, 22a),
- Bedecken des ausgehöhlten Bereichs und des Reliefs mit einer Elastomerschicht (18, 32),
- Entfernen des Elastomers durch Abrieb, bis das Relief offenliegt,
- Durchführen eines Nachbearbeitungsvorgangs auf den Oberflächen des Reliefs und des Elastomers, um ihnen das endgültige Erscheinungsbild zu verleihen.

11. Verfahren nach Anspruch 10, **dadurch gekennzeichnet, dass** es darüber hinaus einen Schritt umfasst, der darin besteht, den ausgehöhlten Bereich (12, 22a) mindestens in dem Abschnitt, der an das Relief (14, 15, 28) angrenzt, mit einer Haftvermittlerschicht (16, 30) zu beschichten, und zwar vor dem Schritt, in welchem das Relief und ausgehöhlte Bereich, der mit der Haftvermittlerschicht beschichtet ist, mit einer Elastomerschicht (18, 32) bedeckt werden.

12. Verfahren nach einem beliebigen der Ansprüche 10 bis 11, **dadurch gekennzeichnet, dass** der Nachbearbeitungsvorgang vom Typ Satinieren oder Polieren ist.
